# EUROPÄISCHE PATENTSCHRIFT

(11) **EP 3 932 255 B1**
(45) Veröffentlichungstag und Bekanntmachung des Hinweises auf die Patenterteilung: **25.01.2023**
(21) Anmeldenummer: 21181892.7
(22) Anmeldetag: 25.06.2021
(51) Int. Cl.: A47B 9/00, G05B 9/00

(54) **HUBSCHALTUNG MIT EINKLEMMSCHUTZ UND HUBVORRICHTUNG**
LIFTING CIRCUIT WITH PINCH PROTECTION AND LIFTING DEVICE
CIRCUIT DE LEVAGE POURVU DE PROTECTION CONTRE LE PIÉGEAGE ET DISPOSITIF DE LEVAGE

(30) Priorität: 30.06.2020 CN 202010623575
(43) Veröffentlichungstag der Anmeldung: 05.01.2022
(73) Patentinhaber: Oceanwell (Xiamen) Industrial Co., Ltd., Xiamen, Fujian (CN)
(72) Erfinder: WANG, Canguo, Haicang Dist. Xiamen (CN); ZHANG, Qingping, Haicang Dist. Xiamen (CN); ZHUANG, Yu, Haicang Dist. Xiamen (CN)
(74) Vertreter: Rätsch, Caroline

(56) Entgegenhaltungen:
- DE-A1- 4 416 803
- DE-A1- 4 420 361
- DE-A1-102006 004 380
- DE-A1-102011 108 417
- US-B1- 6 404 158

## Beschreibung

### Technisches Gebiet

Die vorliegende Erfindung betrifft das Gebiet der Hubschaltungen. Insbesondere betrifft die Erfindung eine Hubschaltung mit Einklemmschutz und eine Hubvorrichtung.

### Stand der Technik

Bei im Haushalt und gewerblich verwendeten Geräten sind häufig Komponenten vorgesehen, die einfache Bewegungen steuern, um die Benutzung zu vereinfachen. So können Blenden von Dunstabzugshauben automatisch geöffnet und geschlossen oder das Öffnen und Schließen der Türen von Küchenschränken elektrisch gesteuert werden. Elektrisch höhenverstellbare Tische und Stühle, Toilettenschüsseln mit Höhenverstellungsfunktion, Handwaschbecken mit Höhenverstellungsfunktion, elektrisch verstellbare Betten oder dergleichen können angehoben und abgesenkt werden. Dies erfolgt bei solchen Produkten in der Regel direkt oder indirekt mittels zweier "Aufwärts/Abwärts" oder "Auf/Zu"-Tasten oder -Schalter, die den Vorwärtslauf/Rückwärtslauf eines Elektromotors oder einer Gruppe von Elektromotoren steuern, so dass die Bewegung der Bewegungskomponente umgesetzt wird.

Bei einer Benutzung derartiger Produkte besteht unter dem Gesichtspunkt der Verwendungssicherheit in einer Bewegungsrichtung ein Verletzungsrisiko durch Einklemmen. Wenn sich beispielsweise die Blende der Dunstabzugshaube schließt, kann man sich leicht die Hand einklemmen. Wenn die Schranktür geschlossen wird, kann man sich ebenfalls die Hand einklemmen. Wenn das Handwaschbecken nach unten fährt, können ein Rollstuhl, eine Hand oder ein Fuß eingeklemmt werden. Bei dieser Art von Produkten sind jedoch nur am Produkt oder im Handbuch Warnhinweise zum Einklemmschutz gegeben. Häufig ist keinerlei Einklemmschutzfunktion vorhanden. Bei Produkten, die teilweise eine Einklemmschutzfunktion zur Verfügung stellen, erfolgt dies in der Regel mittels mehrerer Sensoren, die erfassen, ob ein Einklemmschutz ausgeführt werden muss, wobei durch ein Steuergerät (MCU) der Signalstatus der Einklemmschutzsensoren erfasst und mittels Software ein Anhalten der Bewegungshandlung gesteuert oder eine Umkehrbewegung ausgeführt wird, um das eingeklemmte Objekt (menschliches Körperteil oder Gegenstand) freizugeben.

Alternativ wird mittels Hardware die Bewegungssteuerungsschaltung unterbrochen, um ernsthafte Klemmverletzungen zu verhindern.

Hubschaltungen mit Einklemmschutz sind aus US 6 404 158 B1, sowie auch aus DE 44 20 361 A1, DE 10 2011 108417, DE 10 2006 004380 und DE 44 16 803 A1 bekannt.

Die Herstellungskosten derartiger Lösungskonzepte sind vergleichsweise hoch, und die Konstruktion zur Anpassung an das Produkt ist kompliziert. Zudem müssen gleichzeitig Softwaresicherheitszertifizierungen beantragt werden. Schließlich schaffen diese Lösungskonzepte keine geeigneten Gegensteuermaßnahmen für die jeweilige Fehlerart, so dass keine Sicherheit und Zuverlässigkeit gewährleistet ist.

### Erfindung

Im Hinblick auf die gegenwärtig existierenden technischen Nachteile des Stands der Technik stellt die vorliegende Erfindung ein Konzept einer allein auf Hardware basierenden Klemmschutzschaltung bereit, die vor dem Auftreten einer Klemmverletzung das Anhalten der Bewegung von Bewegungskomponenten sowie eine Umkehrung hinreichend bewirken kann. Die erfindungsgemäße Konstruktion ist unkompliziert, sicher und zuverlässig.

Zur Behebung der technischen Nachteile wird eine Hubschaltung gemäß Anspruch 1 zur Verfügung gestellt, die zwei Relais und einen Elektromotor umfasst, wobei mittels der zwei Relais der Vorwärts- oder Rückwärtslauf des Elektromotors gesteuert wird, um ein Anheben oder Absenken zur Verfügung zu stellen. Die Hubschaltung umfasst ferner eine Einklemmschutzschaltung, die eine Einschaltschaltung, eine Sperrschaltung und eine Backup-Sperrschaltung umfasst, wobei die Einschaltschaltung für den Regelbetrieb des Elektromotors verwendet wird, solange während des Betriebsprozesses keine Blockade auftritt, wobei die Sperrschaltung verwendet wird, um, wenn während des Betriebsprozesses eine Blockade auftritt, zu bewirken, dass der Elektromotor seine Drehung anhält und sich in die entgegengesetzte Richtung bewegt, und wobei die Backup-Sperrschaltung identisch zu der Struktur der Sperrschaltung ausgebildet ist und bei einem Ausfall der Sperrschaltung zum Einsatz kommt, um eine Einklemmschutzfunktion der Einklemmschutzschaltung sicherzustellen.

Die Einklemmschutzschaltung umfasst dabei weiter einen Einklemmschutzschalter, einen Hubschalter und, vorteilhafterweise, ein Steuermodul.

Am Einklemmschutzschalter sind zwei Verbindungsanschlüsse "UP" und "DN Switch" angeordnet. Wenn während des Bewegungsprozesses eine Blockade auftritt, werden "UP" und "DN Switch" des Einklemmschutzschalters eingeschaltet. Am Hubschalter sind drei Verbindungsanschlüsse "DN Switch", "GND" und "UP" angeordnet. Wenn die "Aufwärts"-Taste gedrückt wird, werden "GND" und "UP" verbunden. Wenn die "Abwärts"-Taste gedrückt wird, werden "DN Switch" und "GND" verbunden. Am Steuermodul sind "UP" und "DN"-Anschlüsse angeordnet, die jeweils mit den beiden Anschlüssen der Hubschaltung verbunden sind.

Erfindungsgemäß umfasst die Einschaltschaltung zwei Widerstände, zwei Transistoren und zwei Dioden. Ein Ende des Widerstands R1 ist mit einem Ende des Widerstands R4 verbunden, mit dem alle "UP"-Anschlüsse verbunden sind. Das andere Ende des Widerstands R1 ist mit der Basis des Transistors Q1 verbunden. Das andere Ende des Widerstands R4 ist mit der Basis des Transistors Q2 verbunden. Der Emitter des Transistors Q1 ist mit dem Kollektor des Transistors Q2 verbunden. Der Kollektor des Transistors Q1 ist mit dem "DN"-Anschluss des Steuermoduls verbunden. Der Emitter des Transistors Q2 ist mit den Anoden der parallel geschalteten Dioden D3 und D6 verbunden. Die Kathoden der beiden parallel geschalteten Dioden D3 und D6 sind verbunden, und alle "DN Switch"-Anschlüsse sind mit diesen Kathodenanschlüssen verbunden.

Erfindungsgemäß umfasst die Sperrschaltung drei Widerstände, zwei Transistoren Q3 und Q5, zwei Dioden und einen Kondensator. Die Anode der Diode D1 ist mit dem "DN"-Anschluss des Steuermoduls verbunden. Die Kathode der Diode D1 ist mit dem Emitter des Transistors Q3 verbunden. Die Basis des Transistors Q3 ist mit einem Ende des Widerstands R2 verbunden. Das andere Ende des Widerstands R2 ist mit allen "UP"-Anschlüssen verbunden. Der Kollektor des Transistors Q3 ist jeweils mit einem Ende des Widerstands R5, einem Ende des Widerstands R7 und einem Ende des Kondensators C1 verbunden. Das andere Ende des Widerstands R7 ist mit dem anderen Ende des Kondensators C1 verbunden und an die Schnittstelle "GND" angeschlossen. Das andere Ende des Widerstands R5 ist mit der Basis des Transistors Q5 verbunden. Der Kollektor des Transistors Q5 ist ebenfalls mit allen "UP"-Anschlüssen verbunden. Der Emitter des Transistors Q5 ist mit der Anode der Diode D4 verbunden, und die Kathode der Diode D4 ist mit allen "DN Switch"-Anschlüssen verbunden.

Erfindungsgemäß ist die Struktur der Backup-Sperrschaltung mit der der Sperrschaltung identisch und umfasst drei Widerstände, zwei Transistoren Q4 und Q6, zwei Dioden und einen Kondensator. Die Anode der Diode D2 ist mit dem "DN"-Anschluss des Steuermoduls verbunden. Die Kathode der Diode D2 ist mit dem Emitter des Transistors Q3 verbunden. Die Basis des Transistors Q4 ist mit einem Ende des Widerstands R3 verbunden. Das andere Ende des Widerstands R3 ist mit allen "UP"-Anschlüssen verbunden. Der Kollektor des Transitors Q4 ist jeweils mit einem Ende des Widerstands R6, einem Ende des Widerstands R8 und einem Ende des Kondensators C2 verbunden. Das andere Ende des Widerstands R8 ist mit dem anderen Ende des Kondensators C2 verbunden und an den Anschluss "GND" angeschlossen. Das andere Ende des Widerstands R6 ist mit der Basis des Transistors Q6 verbunden. Der Kollektor des Transitors Q6 ist ebenfalls mit allen "UP"-Anschlüssen verbunden. Der Emitter des Transistors Q6 ist mit der Anode der Diode D5 verbunden, und die Kathode der Diode D5 ist mit allen "DN Switch"-Anschlüssen verbunden.

Vorzugsweise umfasst eine die Hubschaltung verwendende Hubvorrichtung eine Bewegungsbaugruppe und eine Hubbaugruppe. Die Hubvorrichtung umfasst ferner eine Einklemmschutz-Baugruppe, die so ausgebildet ist, dass dann, wenn die Hubbaugruppe bei einer Abwärtsbewegung auf einen Widerstand trifft, sich die Hubbaugruppe in die entgegengesetzte Richtung bewegt.

Vorteilhafterweise umfasst die Bewegungsbaugruppe ein Gehäuseelement, das einen festen Träger und einen beweglichen Träger aufweist, wobei der bewegliche Träger vor dem festen Träger angeordnet und in der Vertikalen verschiebbar ist. Ein Handwaschbecken ist direkt oder indirekt mit dem beweglichen Träger verbunden und wird in Abhängigkeit vom beweglichen Träger gleichzeitig mit diesem auf und ab bewegt, wobei die Hubbaugruppe im Gehäuseelement angeordnet ist und dazu ausgebildet ist, den beweglichen Träger in der Vertikalen zu bewegen.

Vorteilhafterweise ist der feste Träger aus zwei Horizontalelementen und zwei Vertikalelementen zusammengesetzt und bildet einen rechteckigen Rahmen. An dem beweglichen Träger sind mehrere Gleitelemente rechts und links symmetrisch angeordnet. Die Gleitelemente an der rechten und linken Seite des beweglichen Trägers umgreifen jeweils ein Vertikalelement in gleitfähiger Verbindung. Der bewegliche Träger umfasst eine horizontal angeordnete Verbindungsstange. Die beiden Enden der Hubbaugruppe sind jeweils mit der Verbindungsstange und dem zweiten Horizontalelement, dass sich im unteren Bereich befindet, verbunden.

Vorteilhafterweise umfasst die Hubbaugruppe einen Elektromotor, ein Schneckengetriebe, eine elektrisch angetriebene Schubstange und ein Gehäuse. Das untere Ende der elektrisch angetriebenen Schubstange ist schwenkbar an dem Horizontalelement angelenkt. Der Elektromotor und die elektrisch angetriebene Schubstange sind über das drehbare Schneckengetriebe verbunden, wobei das Schneckengetriebe im Gehäuse angeordnet ist und wobei das Gehäuse schwenkbar an der Verbindungsstange angelenkt ist.

Vorteilhafterweise umfasst die Einklemmschutz-Baugruppe eine Befestigungsplatte, einen wasserdichten Mikroschalter und eine Schraube. Die Befestigungsplatte umfasst in treppenförmiger Ausbildung eine erste Vertikalplatte, eine Horizontalplatte und eine zweite Vertikalplatte. Die erste Vertikalplatte ist mittels Schraubverbindung an einer Wand verankert, so dass die Befestigungsplatte an der Wand befestigt ist. Der wasserdichte Mikroschalter ist an der zweiten Vertikalplatte befestigt. An dem wasserdichten Mikroschalter ist ein Taster angeordnet. Die Schraube ist mittels einer Durchgangsöffnung im festen Träger am festen Träger verankert, wobei im montierten Zustand sichergestellt ist, dass die Schraube gerade bis an den Taster am wasserdichten Mikroschalter heranreicht.

Gegenüber dem Stand der Technik weist die vorliegende Erfindung die folgenden Vorteile auf:
1. Bei der vorliegenden Erfindung ist die Hubschaltung mit einer Einklemmschutzschaltung ausgebildet, wobei die Einklemmschutzschaltung, die einen Einklemmschutz zur Verfügung stellt, allein durch eine Hardwareschaltung umgesetzt wird, ohne Software in Anspruch zu nehmen. Aus Sicherheitsaspekten ist dies unkompliziert und zuverlässig, und das Beantragen von Softwaresicherheitszertifizierungen ist nicht notwendig. Außerdem kann die Hardwareschaltung bei der Durchführung von Einklemmschutzhandlungen nach dem Anhalten der Bewegung bewirken, dass das System sich in die entgegengesetzte Richtung bewegt, also automatisch den Zustand des "Auftreffens auf Menschen oder Gegenstände" aufhebt, was die Sicherheit zusätzlich erhöht.
2. Für die Einklemmschutzschaltung muss lediglich eine Steuersignalleitung für die Bewegung des Elektromotors im Vorwärts-/Rückwärtslauf im Steuersystem vorgesehen oder installiert werden. Insbesondere bei Geräten, bei denen eine Bewegungssteuerung durch "Aufwärts/Abwärts"-Tasten mittels eines Relais durchgeführt wird, muss lediglich in der Tastenschaltung die erfindungsgemäße Schaltung hinzugefügt werden, um den Schutz zu gewährleisten.
3. Die Einklemmschutzschaltung ist mit einer Backup-Sperrschaltung ausgestattet, die bewirkt, dass die Einklemmschutzschaltung Sicherheitsfehler berücksichtigt. Bei einem Ausfall einer Baugruppe (Kurzschluss oder offener Stromkreis) kann die gesamte Einklemmschutz-Schutzschaltung weiterhin eine Einklemmschutzfunktion ausüben.
4. Die Einklemmschutz-Baugruppe umfasst eine Befestigungsplatte, einen wasserdichten Mikroschalter und eine Schraube. Im Montagezustand ist sichergestellt, dass die Schraube gerade bis an den Taster am wasserdichten Mikroschalter heranreicht. Wenn beim Absenken auf einen Widerstand getroffen wird, werden Vibrationen an das von der elektrischen Schubstange mitgeführte Horizontalelement und die Schraube am Horizontalelement übertragen. An der Schraube treten minimale Bewegungen auf, wodurch der Taster am wasserdichten Mikroschalter berührt wird. Die Einklemmschutzschaltung kann eine entsprechende Handlung ausführen, und bewirken, dass der Elektromotor seine Drehung anhält und sich in die entgegengesetzte Richtung bewegt, so dass die Einklemmschutzfunktion ausgeführt wird.
5. Beim Taster am Mikroschalter ist der Berührungshubweg einstellbar. Hierzu wird mittels einer Drehung der Schraube gegen den Uhrzeigersinn der Hubweg und damit der Andruck bei einer Blockade eingestellt.

### Beschreibung der Figuren

Die Erfindung wird im Folgenden anhand eines bevorzugten Ausführungsbeispiels im Zusammenhang mit den anhängenden Zeichnungen näher erläutert.
Figur 1 zeigt eine herkömmliche Hubschaltung;
Figur 2 zeigt eine Einklemmschutzschaltung innerhalb der Hubschaltung nach der vorliegenden Erfindung;
Figur 3 zeigt eine Gesamtdarstellung der Hubvorrichtung nach einem Ausführungsbeispiel der vorliegenden Erfindung;
Figur 4 zeigt ein Ausführungsbeispiel der erfindungsgemäßen Hubvorrichtung;
Figur 5 zeigt eine vergrößerte Darstellung der Einklemmschutz-Baugruppe des erfindungsgemäßen Ausführungsbeispiels.

### Ausführungsbeispiele

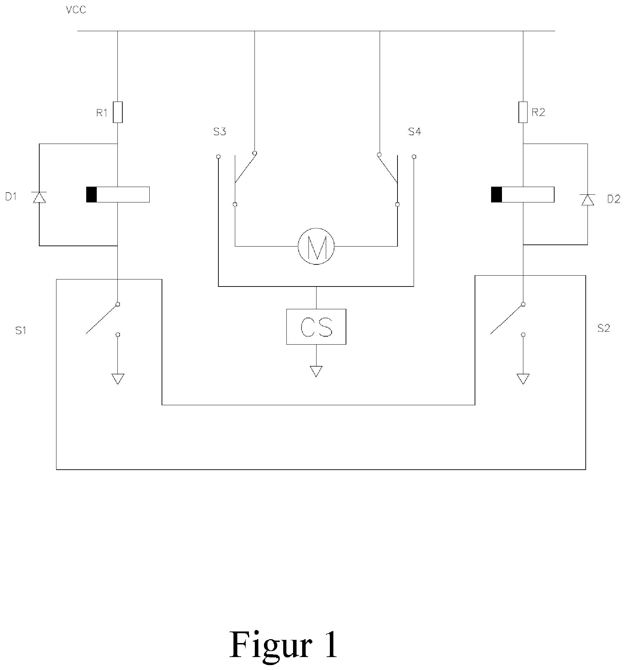

Figur 1 zeigt eine herkömmliche Hubschaltung, also eine handelsübliche Schaltung für die Steuerung des Vorwärts/Rückwärtslaufs eines Elektromotors. Der untere Bereich der Schaltung umfasst zwei geöffnete Schalter, die für die "Steuer"-Abschnitte des Produkts, also die "Aufwärts/Abwärts"- oder "Auf/Zu"-Tasten, stehen. Die beiden Tasten bzw. Schalter steuern jeweils mittels eines Relais die Vorwärtslauf- bzw. Rückwärtslaufbewegung des Elektromotors. Dabei dient das "CS"-Modul der Strommessung, um außergewöhnliche Zustände des Elektromotors wie einen Überstrom, eine Blockade, einen Kurzschluss etc. zu verhindern. Schaltungsteile außerhalb des Schaltungsteils gehören zu einem Teil des "Steuermoduls" der Hauptplatine des Produkts.

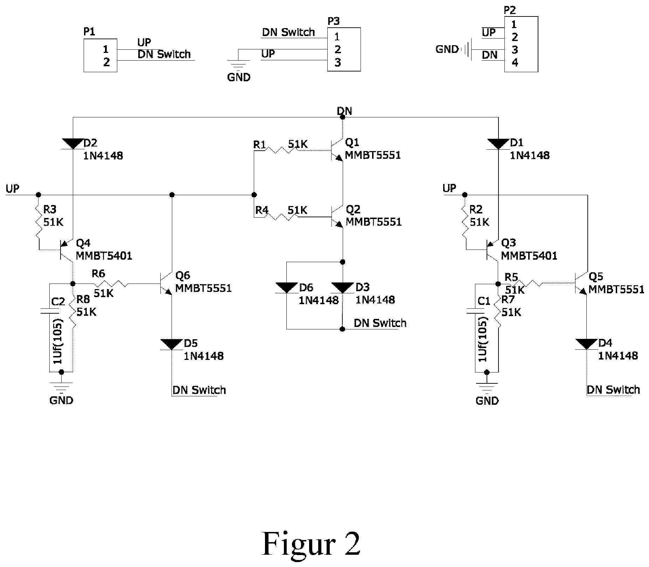

Figur 2 zeigt eine erfindungsgemäße Einklemmschutzschaltung. Sie ersetzt die beiden Schalter innerhalb des Rahmens in Figur 1, ist also eine Hubschaltung, die einen Einklemmschutz umsetzt und eine zuverlässige Einklemmschutzfunktion gewährleistet.

Die Schaltung umfasst einen Einklemmschutzschalter P1, einen Hubschalter P3 und ein Steuermodul P2. Am Einklemmschutzschalter sind zwei Verbindungsanschlüsse "UP" und "DN Switch" angeordnet. Wenn während des Bewegungsprozesses eine Blockade auftritt, wird ein mit dem Einklemmschutzschalter P1 verbundener Sensor (wasserdichter Mikroschalter) geschlossen und "UP" und "DN Switch" eingeschaltet. Am Hubschalter sind drei Verbindungsanschlüsse "DN Switch", "GND" und "UP" angeordnet. Wenn die "Aufwärts"-Taste gedrückt wird, werden "GND" und "UP" verbunden. Wenn die "Abwärts"-Taste gedrückt wird, werden "DN Switch" und "GND" verbunden. Am Steuermodul P2 sind zwei Anschlüsse "UP" und "DN" angeordnet, die mit der Einklemmschutzschaltung verbunden sind.

Die Einklemmschutzschaltung umfasst eine Einschaltschaltung, eine Sperrschaltung und eine Backup-Sperrschaltung. Die Einschaltschaltung wird verwendet, um den Regelbetrieb des Elektromotors aufrechtzuerhalten, solange während des Betriebsprozesses keine Blockade auftritt. Die Sperrschaltung wird verwendet, um, wenn während des Betriebsprozesses eine Blockade auftritt, zu bewirken, dass der Elektromotor seine Drehung anhält und sich in die entgegengesetzte Richtung bewegt. Die Backup-Sperrschaltung ist mit der Struktur der Sperrschaltung identisch und kommt bei einem Ausfall der Sperrschaltung zum Einsatz, um die Einklemmschutzfunktion der Einklemmschutzschaltung sicherzustellen.

Die Einschaltschaltung umfasst zwei Widerstände, zwei Transistoren (des Typs MMBT5551) und zwei Dioden (des Typs 1N4148). Ein Ende des Widerstands R1 ist mit einem Ende des Widerstands R4 verbunden, mit dem alle "UP"-Anschlüsse verbunden sind. Das andere Ende des Widerstands R1 ist mit der Basis des Transistors Q1 verbunden. Das andere Ende des Widerstands R4 ist mit der Basis des Transistors Q2 verbunden. Der Emitter des Transistors Q1 ist mit dem Kollektor des Transistors Q2 verbunden. Der Kollektor des Transistors Q1 ist mit dem "DN"-Anschluss des Steuermoduls verbunden. Der Emitter des Transistors Q2 ist mit den Anoden der parallel geschalteten Dioden D3 und D6 verbunden. Die Kathoden der beiden parallel geschalteten Dioden D3 und D6 sind verbunden, und alle "DN Switch"-Anschlüsse sind mit diesen Kathodenanschlüssen verbunden.

Die Sperrschaltung umfasst drei Widerstände, zwei Transistoren Q3 (des Typs MMBT5401) und Q5 (des Typs MMBT5551), zwei Dioden (des Typs 1N4148) und einen Kondensator (des Typs 1uF(105)). Die Anode der Diode D1 ist mit dem "DN"-Anschluss des Steuermoduls verbunden. Die Kathode der Diode D1 ist mit dem Emitter des Transistors Q3 verbunden. Die Basis des Transistors Q3 ist mit einem Ende des Widerstands R2 verbunden. Das andere Ende des Widerstands R2 ist mit allen "UP"-Anschlüssen verbunden. Der Kollektor des Transistors Q3 ist jeweils mit einem Ende des Widerstands R5, einem Ende des Widerstands R7 und einem Ende des Kondensators C1 verbunden. Das andere Ende des Widerstands R7 ist mit dem anderen Ende des Kondensators C1 verbunden und an den "GND"-Anschluss angeschlossen. Das andere Ende des Widerstands R5 ist mit der Basis des Transistors Q5 verbunden. Der Kollektor des Transistors Q5 ist ebenfalls mit allen "UP"-Anschlüssen verbunden. Der Emitter des Transistors Q5 ist mit der Anode der Diode D4 verbunden, und die Kathode der Diode D4 ist mit allen "DN Switch"-Anschlüssen verbunden.

Die Struktur der Backup-Sperrschaltung ist mit der der Sperrschaltung identisch und umfasst drei Widerstände, zwei Transistoren Q4 (des Typs MMBT5401) und Q6 (des Typs MMBT5551), zwei Dioden (des Typs 1N4148) und einen Kondensator (des Typs 1uF(105)). Die Anode der Diode D2 ist mit dem "DN"-Anschluss des Steuermoduls verbunden. Die Kathode der Diode D2 ist mit dem Emitter des Transistors Q4 verbunden. Die Basis des Transistors Q4 ist mit einem Ende des Widerstands R3 verbunden. Das andere Ende des Widerstands R3 ist mit allen "UP"-Anschlüssen verbunden. Der Kollektor des Transitors Q4 ist jeweils mit einem Ende des Widerstands R6, einem Ende des Widerstands R8 und einem Ende des Kondensators C2 verbunden. Das andere Ende des Widerstands R8 ist mit dem anderen Ende des Kondensators C2 verbunden und an den "GND"-Anschluss angeschlossen. Das andere Ende des Widerstands R6 ist mit der Basis des Transistors Q6 verbunden. Der Kollektor des Transistors Q6 ist ebenfalls mit allen "UP"-Anschlüssen verbunden. Der Emitter des Transistors Q6 ist mit der Anode der Diode D5 verbunden, und die Kathode der Diode D5 ist mit allen "DN Switch"-Anschlüssen verbunden.

Arbeitsprinzip der Schaltung:
Wenn die "Abwärts"-Taste des Hubschalters P3 gedrückt wird, also "DN_Switch" mit "GND" verbunden ist, empfängt der "UP"-Anschluss durch das Relais RL1 weiterhin Strom, wodurch ein Einschaltstrom an Q1 und Q2 geliefert wird; Q1, Q2 sind eingeschaltet, RL2 löst eine Betätigung aus, der Elektromotor dreht sich und bewegt sich abwärts. Wenn während des Betriebsprozesses eine Blockade auftritt, wird der mit P1 verbundene Sensor ausgelöst, so dass "UP" und "DN_Switch" eingeschaltet werden, also "UP" und "DN_Switch" gleichzeitig mit "GND" verbunden sind. Dabei erhält die Basis von Q3 (bei Backupschaltung Q4) Einschaltstrom, Q3 wird eingeschaltet.

Gleichzeitig werden die Basen von Q1, Q2 nicht mehr versorgt und abgeschaltet. Die Basis von Q5 (bei Backupschaltung Q6) erhält sofort durch D1-Q3 (bei Backupschaltung D2-Q4) Einschaltstrom. Gleichzeitig bilden Q3 und Q5 (bei Backupschaltung Q4 und Q6) eine Sperre. Q5 (bei Backupschaltung Q6) wird eingeschaltet. Dadurch wird der Strom für das Relais RL2 zur Abwärts-Steuerung im Steuermodul unterbrochen, das Aufwärtsrelais RL1 empfängt Strom und wird geschlossen, der Elektromotor bewegt sich in die entgegengesetzte Richtung. P1 befindet sich nicht mehr im Auslösezustand, aber aufgrund der Sperrwirkung von Q3 und Q5 (bei Backupschaltung Q4 und Q6) wird die Bewegung des Elektromotors in die entgegengesetzte Richtung fortgesetzt, bis die "Abwärts"-Taste losgelassen wird ("DN_Switch" und "GND" werden voneinander getrennt), oder der Elektromotor bewegt sich, bis er am Ende des Hubwegs automatisch anhält. Nachdem die "Abwärts"-Taste losgelassen wurde, ist der Emitter von Q5 (bei Backupschaltung Q6) potentialfrei, die Basis von Q3 (bei Backupschaltung Q4) wird mit Strom versorgt und Q3 abgeschaltet. Die Basen von Q1, Q2 werden mit Strom versorgt und Q1, Q2 somit eingeschaltet, die Schaltung wird zurückgesetzt (Doppel-Backup bei der Schaltung).

In einem weiteren Aspekt des Ausführungsbeispiels der vorliegenden Erfindung werden ein Handwaschbecken mit einer Höhenverstellungsfunktion sowie eine Hubvorrichtung mit einer erfindungsgemäßen Einklemmschutzschaltung bereitgestellt, die einen hinreichenden Einklemmschutz zur Verfügung stellt.

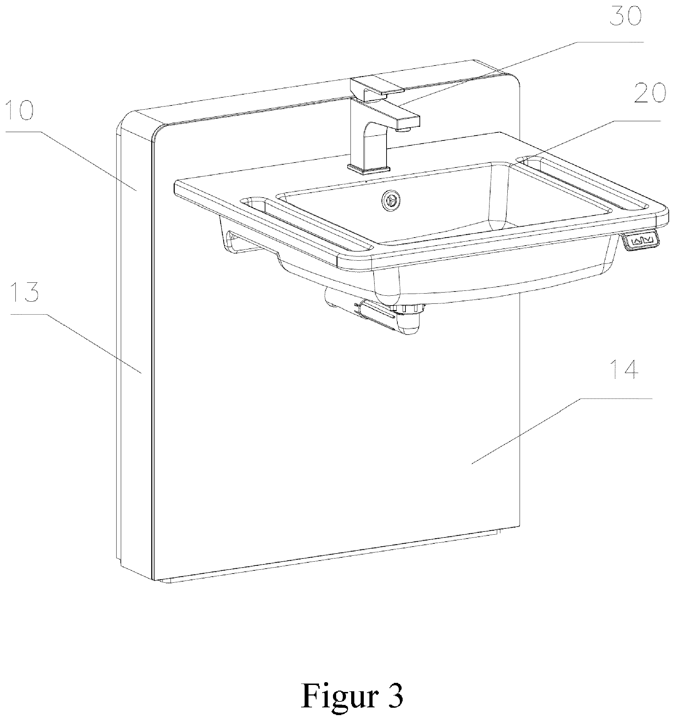

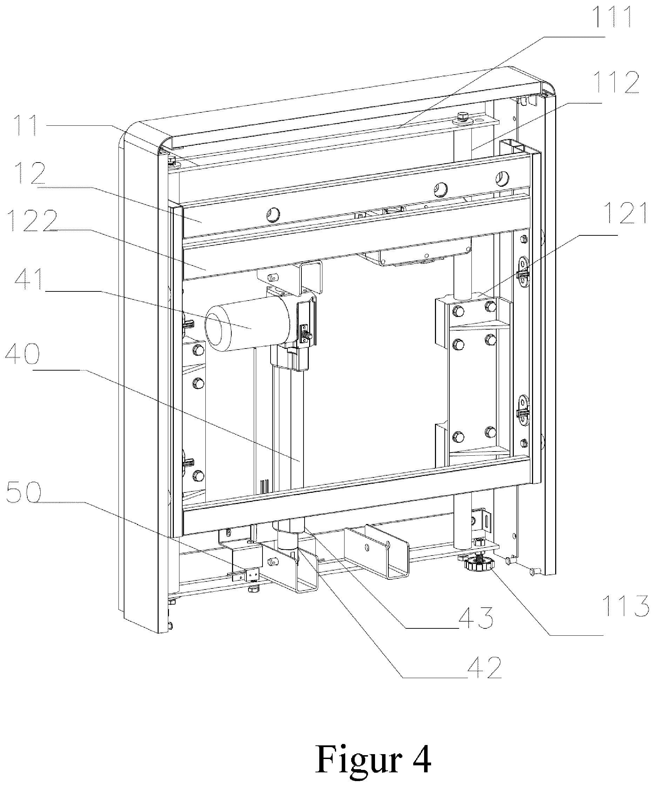

Bezugnehmend auf die Figuren 3 und 4 umfasst das höhenverstellbare Handwaschbecken mit der Einklemmschutz-Hubvorrichtung eine Bewegungsbaugruppe (also eine Handwaschbecken-Baugruppe), eine Hubbaugruppe und eine Einklemmschutz-Baugruppe. Die Handwaschbecken-Baugruppe umfasst ein Gehäuseelement 10, ein Handwaschbecken 20 und eine Wasserarmatur 30. Das Handwaschbecken 20 befindet sich auf der Vorderseite des Gehäuseelements 10. Die Wasserarmatur 30 ist am Handwaschbecken 20 angeordnet. Im unteren Teil des Handwaschbeckens 20 ist eine Wasserabflussöffnung angeordnet. Das Gehäuseelement 10 umfasst einen festen Träger 11, einen beweglichen Träger 12, eine Seitenrahmen 13 und eine Frontplatte 14. Der bewegliche Träger 12 befindet sich vor dem festen Träger 11 und kann in der Vertikalen bewegt werden. Der Seitenrahmen 13 umschließt die beiden rechten und linken Seiten sowie die Oberseite des festen Trägers 11 und des beweglichen Trägers 12. Selbstverständlich ist es bei einer Montage von Waschbecken und Gehäuseelement durch Aufhängen an Wandflächen auch möglich, dass die Unterseite ebenfalls mit umschlossen wird. Die Frontplatte 14 deckt den festen Träger 11 und den beweglichen Träger 12 vorne ab. Der Seitenrahmen 13, die Frontplatte 14 und das Handwaschbecken 20 sind direkt oder indirekt mit dem beweglichen Träger 12 verbunden und werden in Abhängigkeit vom beweglichen Träger 12 gleichzeitig mit diesem auf und ab bewegt. Der bewegliche Träger 12 führt den Seitenrahmen 13, die Frontplatte 14 und das Handwaschbecken 20 also bei der Verschiebung in der Vertikalen mit. Die Hubbaugruppe ist in dem Gehäuseelement 10 angeordnet und dazu ausgebildet, den beweglichen Träger 12 in der Vertikalen zu bewegen.

Der feste Träger 11 ist aus zwei Horizontalelementen 111 und zwei Vertikalelementen 112 zusammengesetzt und bildet einen rechteckigen Rahmen. An dem beweglichen Träger 12 sind mehrere Gleitelemente 121 rechts und links symmetrisch angeordnet. Die Gleitelemente 121 an der rechten und linken Seite des bewegliche Trägers umgreifen jeweils ein Vertikalelement 112 in gleitfähiger Verbindung.

Vorteilhafterweise sind die Gleitelemente 121 als Linearlager und die Vertikalelemente 112 als lineare Führungsachse ausgebildet, so dass Gleithemmungen vermieden werden. Der bewegliche Träger 12 umfasst eine horizontal angeordnete Verbindungsstange 122. Die beiden Enden der Hubbaugruppe 40 sind jeweils mit der Verbindungsstange 122 und dem Horizontalelement 111, dass sich im unteren Bereich befindet, verbunden. Somit kann die Hubbaugruppe 40 durch ein Hochschieben der Verbindungsstange 122 den beweglichen Träger anheben.

Die Hubbaugruppe 40 umfasst einen Elektromotor 41, ein Schneckengetriebe, eine elektrisch angetriebene Schubstange 42 und ein Gehäuse 43. Das untere Ende der elektrisch angetriebenen Schubstange 42 ist schwenkbar an dem Horizontalelement 111 angelenkt. Der Elektromotor 41 und die elektrisch angetriebene Schubstange 42 sind über das drehbare Schneckengetriebe verbunden. Das Schneckengetriebe ist im Gehäuse 43 angeordnet, wobei das Gehäuse 43 schwenkbar an der Verbindungsstange 122 angelenkt ist. Da die Hubbaugruppe 40 lediglich ein Mitführen des beweglichen Trägers bei der Verschiebung in der Vertikalen ermöglichen muss, kann es sich auch um einen Zylinder- oder Kettenmechanismus handeln.

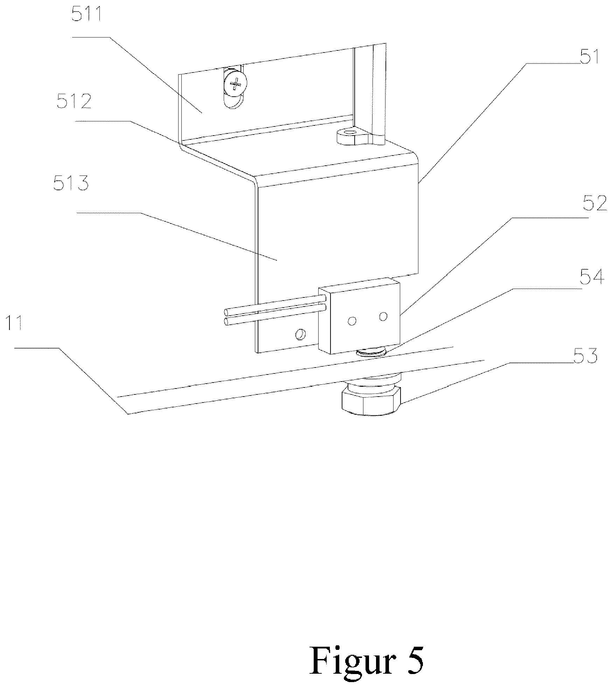

Figur 5 zeigt eine vergrößerte Darstellung der Einklemmschutz-Baugruppe. Die Einklemmschutz-Baugruppe 50 umfasst eine Befestigungsplatte 51, einen wasserdichten Mikroschalter 52 und eine Schraube 53. Die Befestigungsplatte 51 umfasst in treppenförmiger Ausbildung eine erste Vertikalplatte 511, eine Horizontalplatte 512 und eine zweite Vertikalplatte 513. Die erste Vertikalplatte 511 ist mittels einer Schraubverbindung an einer Wand verankert, so dass die Befestigungsplatte 51 an der Wand befestigt ist. Der wasserdichte Mikroschalter 52 ist an der zweiten Vertikalplatte 513 befestigt. Der wasserdichte Mikroschalter 52 ist also so befestigt, dass er sich nicht bewegen kann. An dem wasserdichten Mikroschalter 52 ist ein Taster 54 angeordnet. Die Schraube 53 ist mittels einer Durchgangsöffnung im Horizontalelement 111 des festen Trägers 11 am festen Träger 11 verankert, wobei im montierten Zustand sichergestellt ist, dass die Schraube 53 gerade bis an den Taster am wasserdichten Mikroschalter heranreicht.

Am Unterteil des Befestigungsträgers 11 ist ein höhenregulierbarer Stellfuß 113 angeordnet.

Das Arbeitsprinzip der mechanischen Konstruktion ist wie folgt: Dadurch, dass im montierten Zustand sichergestellt ist, dass die Schraube gerade bis an den Taster am wasserdichten Mikroschalter heranreicht, können, wenn das Handwaschbecken beim Absenken auf einen Widerstand trifft (beispielsweise wenn Druck auf den Oberschenkel gelangt), Vibrationen an das von der elektrisch angetriebenen Schubstange mitgeführte Horizontalelement und die Schraube am Horizontalelement übertragen werden. An der Schraube treten minimale Bewegungen auf, wodurch der Taster am wasserdichten Mikroschalter berührt wird. Die Einklemmschutzschaltung kann eine entsprechende Handlung ausführen, und bewirken, dass der Elektromotor seine Drehung anhält und sich in die entgegengesetzte Richtung bewegt, so dass die elektrische Schubstange schließlich das Absenken beendet und sich wieder anhebt. Der Hubweg des Tasters am Mikroschalter beträgt 0 - 1,2 mm, wobei mittels einer Drehung der Schraube gegen den Uhrzeigersinn der Hubweg verkleinert werden kann. Auf diese Weise kann der Blockadeandruck auf weniger als 4 kg reduziert werden.

## Patentansprüche

1. Hubschaltung, die ein erstes Relais RL1, ein zweites Relais RL2 und einen Elektromotor umfasst, wobei
mittels der beiden Relais RL1 und RL2 der Vorwärts- oder Rückwärtslauf des Elektromotors gesteuert wird, um ein Anheben oder Absenken zur Verfügung zu stellen,
wobei das Einschalten des ersten Relais RL1 den Vorwärtslauf des Elektromotors für das Anheben und das Einschalten des zweiten Relais RL2 den Rückwärtslauf des Elektromotors für das Absenken bewirkt,
wobei die Hubschaltung einen Steuer-Abschnitt zum Ansteuern der Relais , aufweist,
wobei ein Steueranschluss (UP) des ersten Relais RL1 mit dem Steuer-Abschnitt verbunden ist und das Relais RL1 eingeschaltet ist, wenn dieser Steueranschluss (UP) im Steuer-Abschnitt mit Masse verbunden ist,
wobei ein Steueranschluss (DN) des zweiten Relais RL2 mit dem Steuer-Abschnitt verbunden ist und das Relais RL2 eingeschaltet ist, wenn dieser Steueranschluss (DN) im Steuer-Abschnitt mit Masse verbunden ist,
**dadurch gekennzeichnet,**
**dass** der Steuer-Abschnitt der Hubschaltung eine Einklemmschutzschaltung umfasst,
wobei die Einklemmschutzschaltung einen eine Aufwärts-Taste und eine Abwärts-Taste aufweisenden Hubschalter (P3), einen Einklemmschutzschalter (P1), eine Einschaltschaltung, eine Sperrschaltung und eine Backup-Sperrschaltung aufweist,
wobei am Hubschalter (P3) drei Verbindungsanschlüsse angeordnet sind, die mit Masse (GND), dem Steueranschluss (UP) des ersten Relais RL1 und mit einem ersten Verbindungsanschluss (DN Switch) des Einklemmschutzschalters (P1) verbunden sind, wobei der mit Masse (GND) verbundene Verbindungsanschluss mit dem mit dem Steueranschluss (UP) des ersten Relais RL1 verbundenen Verbindungsanschluss verbunden ist, wenn die Aufwärts-Taste gedrückt ist, was den Vorwärtslauf des Elektromotors für das Anheben bewirkt, und
wobei der mit Masse (GND) verbundene Verbindungsanschluss mit dem mit dem ersten Verbindungsanschluss (DN Switch) des Einklemmschutzschalters (P1) verbundenen Verbindungsanschluss verbunden ist, wenn die Abwärts-Taste gedrückt ist,
wobei der Einklemmschutzschalter (P1) eingerichtet ist, mit einem Sensor verbunden zu werden, der auslöst, wenn während des Betriebsprozesses eine Blockade auftritt,
wobei ein zweiter Verbindungsanschluss des Einklemmschutzschalters (P1) mit dem Steueranschluss (UP) des ersten Relais RL1 verbunden ist und der erste Verbindungsanschluss (DN Switch) und der zweite Verbindungsanschluss des Einklemmschutzschalters (P1) miteinander verbunden werden, wenn während des Absenkens eine Blockade auftritt,
wobei die Einschaltschaltung für den Regelbetrieb des Elektromotors verwendet wird, solange während des Betriebsprozesses keine Blockade auftritt, und die Einschaltschaltung zwei Widerstände (R1, R4), zwei Transistoren (Q1, Q2) und zwei Dioden (D3, D6) aufweist, wobei
- ein Ende eines ersten Widerstands (R1) mit einem Ende eines zweiten Widerstands (R4) und dem Steueranschluss (UP) des ersten Relais RL1,
- das andere Ende des ersten Widerstands (R1) mit der Basis eines ersten Transistors (Q1),
- das andere Ende des zweiten Widerstands (R4) mit der Basis eines zweiten Transistors (Q2),
- der Emitter des ersten Transistors (Q1) mit dem Kollektor des zweiten Transistors (Q2),
- der Kollektor des ersten Transistors (Q1) mit dem Steueranschluss (DN) des zweiten Relais RL2 und
- der Emitter des zweiten Transistors (Q2) mit den Anoden der beiden parallel geschalteten Dioden (D3, D6) verbunden ist und
- die Kathoden der beiden parallel geschalteten Dioden (D3, D6) mit dem ersten Verbindungsanschluss (DN Switch) des Einklemmschutzschalters (P1) verbunden sind,
so dass dann, wenn die Abwärts-Taste gedrückt ist, der erste Verbindungsanschluss (DN Switch) des Einklemmschutzschalters (P1) und somit die Kathoden der beiden parallel geschalteten Dioden (D3, D6) mit Masse (GND) verbunden sind, wobei die Basis-Anschlüsse der ersten und zweiten Transistoren (Q1, Q2) über die Widerstände (R1, R4), den Steueranschluss (UP) des ersten Relais RL1 und das erste Relais einen Einschaltstrom erhalten und somit der Steueranschluss (DN) des zweiten Relais RL2 mit Masse verbunden wird, was ein Einschalten des zweiten Relais RL2 und den Rückwärtslauf des Elektromotors für das Absenken bewirkt, wobei die Sperrschaltung verwendet wird, um dann, wenn während des Betriebsprozesses eine Blockade auftritt, zu bewirken, dass der Elektromotor seine Drehung anhält und sich in die entgegengesetzte Richtung bewegt,
und wobei die Backup-Sperrschaltung mit der Struktur der Sperrschaltung identisch und parallel zu dieser geschaltet ist, so dass sie bei einem Ausfall der Sperrschaltung die Einklemmschutzfunktion der Einklemmschutzschaltung sicherstellt,
wobei die Sperrschaltung und die Backup-Sperrschaltung jeweils drei Widerstände (R2, R5, R7 bzw. R3, R6, R8), zwei Transistoren (Q3, Q5 bzw. Q4, Q6), zwei Dioden (D1, D4 bzw. D2, D5) und einen Kondensator (C1 bzw. C2) aufweisen, wobei jeweils
- die Anode einer ersten Diode (D1 bzw. D2) mit dem Steueranschluss (DN) des zweiten Relais RL2,
- die Kathode der ersten Diode (D1 bzw. D2) mit dem Emitter eines ersten Transistors (Q3 bzw. Q4),
- die Basis des ersten Transistors (Q3 bzw. Q4) mit einem Ende eines ersten Widerstands (R2 bzw. R3),
- das andere Ende des ersten Widerstands (R2 bzw. R3) mit dem Steueranschluss (UP) des ersten Relais RL1 ,
- der Kollektor des ersten Transistors (Q3 bzw. Q4) jeweils mit einem Ende eines zweiten Widerstands (R5 bzw. R6), einem Ende eines dritten Widerstands (R7 bzw. R8) und einem Ende des Kondensators (C1 bzw. C2),
- das andere Ende des dritten Widerstands (R7 bzw. R8) mit dem anderen Ende des Kondensators (C1 bzw. C2) und der Masse (GND),
- das andere Ende des zweiten Widerstands (R5 bzw. R6) mit der Basis eines zweiten Transistors (Q5 bzw. Q6),
- der Kollektor des zweiten Transistors (Q5 bzw. Q6) ebenfalls mit dem Steueranschluss (UP) des ersten Relais RL1,
- der Emitter des zweiten Transistors (Q5 bzw. Q6) mit der Anode einer zweiten Diode (D4 bzw. D5) und
- die Kathode der zweiten Diode (D4 bzw. D5) mit dem ersten Verbindungsanschluss (DN Switch) des Einklemmschutzschalters (P1)
verbunden ist, so dass dann, wenn während des Drückens der Abwärts-Taste des Hubschalters (P3) eine Blockade auftritt und der erste Verbindungsanschluss (DN Switch) und der zweite Verbindungsanschluss des Einklemmschutzschalters (P1) miteinander und durch den Hubschalter (P3) mit Masse (GND) verbunden werden, die Basis-Anschlüsse der ersten Transistoren (Q3 bzw. Q4) der Sperrschaltung und der Backup-Sperrschaltung einen Einschaltstrom erhalten, so dass die ersten Transistoren (Q3 bzw. Q4) einschalten, so dass die Basis-Anschlüsse der zweiten Transistoren (Q5 bzw. Q6) der Sperrschaltung und der Backup-Sperrschaltung einen Einschaltstrom erhalten, so dass auch die zweiten Transistoren (Q5 bzw. Q6) einschalten und somit den Steueranschluss (UP) des ersten Relais RL1 mit dem ersten Verbindungsanschluss (DN Switch) des Einklemmschutzschalters (P1) verbinden, so dass auch dann, wenn der Einklemmschutzschalter (P1) öffnet, die Aufwärts-Bewegung fortgesetzt wird, solange die Abwärts-Taste des Hubschalters (P3) gedrückt bleibt.

2. Hubvorrichtung mit einer ein höhenverstellbares Handwaschbecken (20) aufweisenden Bewegungsbaugruppe, einer Hubbaugruppe (40), einer Einklemmschutz-Baugruppe (50) und einer Hubschaltung nach Anspruch 1, wobei die Hubbaugruppe (40) den Elektromotor der Hubschaltung und die Einklemmschutz-Baugruppe (50) den Einklemmschutzschalter (P1; 52) der Hubschaltung umfasst, wobei die Einklemmschutz-Baugruppe (50) dafür sorgt, dass dann, wenn die Hubbaugruppe (40) bei einer Abwärtsbewegung auf einen Widerstand trifft, der Einklemmschutzschalter (P1; 52) betätigt wird, so dass sich der Elektromotor der Hubbaugruppe (40) in die entgegengesetzte Richtung bewegt.

3. Hubvorrichtung nach Anspruch 2, **dadurch gekennzeichnet, dass** die Bewegungsbaugruppe ein Gehäuseelement (10) umfasst, wobei das Gehäuseelement (10) einen festen Träger (11) und einen beweglichen Träger (12) aufweist, der vor dem festen Träger (11) angeordnet und in der Vertikalen verschiebbar ist, und wobei die Hubbaugruppe (40) in dem Gehäuseelement (10) angeordnet und dazu ausgebildet ist, den beweglichen Träger (12) in der Vertikalen zu bewegen.

4. Hubvorrichtung nach Anspruch 3, **dadurch gekennzeichnet, dass** der feste Träger (11) aus zwei Horizontalelementen (111) und zwei Vertikalelementen (112) zusammengefügt ist und einen rechteckigen Rahmen bildet, wobei am beweglichen Träger (12) mehrere Gleitelemente (121) rechts und links symmetrisch angeordnet sind, die an der rechten und linken Seite des beweglichen Trägers (12) jeweils ein Vertikalelement (112) in gleitfähiger Verbindung umgreifen, wobei der bewegliche Träger (12) eine horizontal angeordnete Verbindungsstange (122) umfasst, und wobei die beiden Enden der Hubbaugruppe (40) mit der Verbindungsstange (122) bzw. dem zweiten Horizontalelement (111) verbunden sind, das sich im unteren Bereich befindet.

5. Hubvorrichtung nach Anspruch 4, **dadurch gekennzeichnet, dass** die Hubbaugruppe (40) den Elektromotor, ein Schneckengetriebe, eine elektrisch angetriebene Schubstange (42) und ein Gehäuse (43) umfasst, wobei das untere Ende der elektrisch angetriebenen Schubstange (42) schwenkbar an dem Horizontalelement (111) angelenkt ist, wobei der Elektromotor und die elektrisch angetriebene Schubstange (42) über das drehbare Schneckengetriebe verbunden sind, wobei das Schneckengetriebe im Gehäuse (43) angeordnet ist, und wobei das Gehäuse (43) schwenkbar an der Verbindungsstange (122) angelenkt ist.

6. Hubvorrichtung nach Anspruch 3, **dadurch gekennzeichnet, dass** die Einklemmschutz-Baugruppe eine Befestigungsplatte (51), einen wasserdichten Mikroschalter (52) und eine Schraube (53) umfasst, wobei die Befestigungsplatte (51) in treppenförmiger Ausbildung eine erste Vertikalplatte (511), eine Horizontalplatte (512) und eine zweite Vertikalplatte (513) umfasst, wobei die erste Vertikalplatte (511) durch eine Schraubverbindung an einer Wand verankert ist, so dass die Befestigungsplatte (51) an der Wand befestigt ist, wobei der wasserdichte Mikroschalter (52) an der zweiten Vertikalplatte (513) befestigt ist, wobei am wasserdichten Mikroschalter (52) ein Taster (54) angeordnet ist, wobei die Schraube (53) mittels einer im Horizontalelement (111) des festen Trägers (11) angeordneten Durchgangsöffnung am festen Träger (11) verankert ist, wobei im montierten Zustand sichergestellt ist, dass die Schraube (53) gerade bis an den Taster (54) am wasserdichten Mikroschalter (52) heranreicht, und wobei der Berührungshubweg des Tasters (54) einstellbar ist.

## Claims

1. Lifting circuit which comprises a first relay RL1, a second relay RL2 and an electric motor, wherein the forward or backward running of the electric motor is controlled by means of the two relays RL1 and RL2 in order to provide lifting or lowering, wherein switching on the first relay RL1 causes the forward running of the electric motor for the lifting and switching on the second relay RL2 causes the backward running of the electric motor for the lowering, wherein the lifting circuit has a control section for actuating the relays, wherein a control terminal (UP) of the first relay RL1 is connected to the control section and the relay RL1 is switched on when this control terminal (UP) is connected to earth in the control section, wherein a control terminal (DN) of the second relay RL2 is connected to the control section and the relay RL2 is switched on when this control terminal (DN) is connected to earth in the control section, **characterized in that** the control section of the lifting circuit comprises an anti-trap protection circuit, wherein the anti-trap protection circuit has a lifting switch (P3) having an up button and a down button, an anti-trap protection switch (P1), a switch-on circuit, a switch-off circuit and a backup switch-off circuit, wherein arranged at the lifting switch (P3) are three connection terminals which are connected to earth (GND), to the control terminal (UP) of the first relay RL1 and to a first connection terminal (DN Switch) of the anti-trap protection switch (P1), wherein the connection terminal connected to earth (GND) is connected to the connection terminal connected to the control terminal (UP) of the first relay RL1 when the up button is pressed, causing the forward running of the electric motor for the lifting, and wherein the connection terminal connected to earth (GND) is connected to the connection terminal connected to the first connection terminal (DN Switch) of the anti-trap protection switch (P1) when the down button is pressed, wherein the anti-trap protection switch (P1) is configured to be connected to a sensor which trips when an obstruction occurs during the operating process, wherein a second connection terminal of the anti-trap protection switch (P1) is connected to the control terminal (UP) of the first relay RL1 and the first connection terminal (DN Switch) and the second connection terminal of the anti-trap protection switch (P1) are connected to each other when an obstruction occurs during the lowering, wherein the switch-on circuit is used for the regular operation of the electric motor so long as no obstruction occurs during the operating process, and the switch-on circuit has two resistors (R1, R4), two transistors (Q1, Q2) and two diodes (D3, D6), wherein
- one end of a first resistor (R1) is connected to one end of a second resistor (R4) and to the control terminal (UP) of the first relay RL1,
- the other end of the first resistor (R1) is connected to the base of a first transistor (Q1),
- the other end of the second resistor (R4) is connected to the base of a second transistor (Q2),
- the emitter of the first transistor (Q1) is connected to the collector of the second transistor (Q2),
- the collector of the first transistor (Q1) is connected to the control terminal (DN) of the second relay RL2 and
- the emitter of the second transistor (Q2) is connected to the anodes of the two parallel-connected diodes (D3, D6) and
- the cathodes of the two parallel-connected diodes (D3, D6) are connected to the first connection terminal (DN Switch) of the anti-trap protection switch (P1),
such that, when the down button is pressed, the first connection terminal (DN Switch) of the anti-trap protection switch (P1) and thus the cathodes of the two parallel-connected diodes (D3, D6) are connected to earth (GND), wherein the base terminals of the first and second transistors (Q1, Q2) receive a switch-on current via the resistors (R1, R4), the control terminal (UP) of the first relay RL1 and the first relay, and the control terminal (DN) of the second relay RL2 is thus connected to earth, causing the second relay RL2 to switch on and the backward running of the electric motor for the lowering, wherein the switch-off circuit is used in order to cause the electric motor to stop its rotation and move in the opposite direction when an obstruction occurs during the operating process, and wherein the backup switch-off circuit has an identical structure to the switch-off circuit and is connected in parallel therewith, such that it ensures the anti-trap protection function of the anti-trap protection circuit in the event that the switch-off circuit fails, wherein the switch-off circuit and the backup switch-off circuit each have three resistors (R2, R5, R7 and R3, R6, R8, respectively), two transistors (Q3, Q5 and Q4, Q6, respectively), two diodes (D1, D4 and D2, D5, respectively) and one capacitor (C1 and C2, respectively), wherein in each case
- the anode of a first diode (D1 and D2, respectively) is connected to the control terminal (DN) of the second relay RL2,
- the cathode of the first diode (D1 and D2, respectively) is connected to the emitter of a first transistor (Q3 and Q4, respectively),
- the base of the first transistor (Q3 and Q4, respectively) is connected to one end of a first resistor (R2 and R3, respectively),
- the other end of the first resistor (R2 and R3, respectively) is connected to the control terminal (UP) of the first relay RL1,
- the collector of the first transistor (Q3 and Q4, respectively) is connected to each of one end of a second resistor (R5 and R6, respectively), one end of a third resistor (R7 and R8, respectively) and one end of the capacitor (C1 and C2, respectively),
- the other end of the third resistor (R7 and R8, respectively) is connected to the other end of the capacitor (C1 and C2, respectively) and to earth (GND),
- the other end of the second resistor (R5 and R6, respectively) is connected to the base of a second transistor (Q5 and Q6, respectively),
- the collector of the second transistor (Q5 and Q6, respectively) is likewise connected to the control terminal (UP) of the first relay RL1,
- the emitter of the second transistor (Q5 and Q6, respectively) is connected to the anode of a second diode (D4 and D5, respectively) and
- the cathode of the second diode (D4 and D5, respectively) is connected to the first connection terminal (DN Switch) of the anti-trap protection switch (P1),
such that, when an obstacle occurs during the pressing of the down button of the lifting switch (P3) and the first connection terminal (DN Switch) and the second connection terminal of the anti-trap protection switch (P1) are connected to each other and by way of the lifting switch (P3) to earth (GND), the base terminals of the first transistors (Q3 and Q4, respectively) of the switch-off circuit and of the backup switch-off circuit receive a switch-on current, such that the first transistors (Q3 and Q4, respectively) switch on, such that the base terminals of the second transistors (Q5 and Q6, respectively) of the switch-off circuit and of the backup switch-off circuit receive a switch-on current, such that the second transistors (Q5 and Q6, respectively) also switch on and thus connect the control terminal (UP) of the first relay RL1 to the first connection terminal (DN Switch) of the anti-trap protection switch (P1), such that, even when the anti-trap protection switch (P1) opens, the upward movement is continued so long as the down button of the lifting switch (P3) remains pressed.

2. Lifting device with a movement assembly having a height-adjustable washbasin (20), with a lifting assembly (40), an anti-trap protection assembly (50) and a lifting circuit according to Claim 1, wherein the lifting assembly (40) comprises the electric motor of the lifting circuit, and the anti-trap protection assembly (50) comprises the anti-trap protection switch (P1; 52) of the lifting circuit, wherein the anti-trap protection assembly (50) ensures that, when the lifting assembly (40) meets any resistance during a downward movement, the anti-trap protection switch (P1; 52) is actuated, such that the electric motor of the lifting assembly (40) moves in the opposite direction.

3. Lifting device according to Claim 2, **characterized in that** the movement assembly comprises a housing element (10), wherein the housing element (10) has a fixed support (11) and a movable support (12) which is arranged in front of the fixed support (11) and is able to be displaced vertically, and wherein the lifting assembly (40) is arranged in the housing element (10) and is designed to move the movable support (12) vertically.

4. Lifting device according to Claim 3, **characterized in that** the fixed support (11) is made up of two horizontal elements (111) and two vertical elements (112) and forms a rectangular frame, wherein a plurality of sliding elements (121) are arranged symmetrically on the right and on the left of the movable support (12) and each one surrounds a vertical element (112) on the right and left side of the movable support (12) in a sliding connection, wherein the movable support (12) comprises a horizontally arranged connecting bar (122), and wherein the two ends of the lifting assembly (40) are respectively connected to the connecting bar (122) and to the second horizontal element (111) which is situated in the lower region.

5. Lifting device according to Claim 4, **characterized in that** the lifting assembly (40) comprises the electric motor, a worm gear, an electrically driven push rod (42) and a housing (43), wherein the lower end of the electrically driven push rod (42) is articulated to the horizontal element (111) in a pivotable manner, wherein the electric motor and the electrically driven push rod (42) are connected via the rotatable worm gear, wherein the worm gear is arranged in the housing (43), and wherein the housing (43) is articulated to the connecting bar (122) in a pivotable manner.

6. Lifting device according to Claim 3, **characterized in that** the anti-trap protection assembly comprises a fastening plate (51), a waterproof micro-switch (52) and a screw (53), wherein the fastening plate (51) comprises, formed in the shape of a step, a first vertical plate (511), a horizontal plate (512) and a second vertical plate (513), wherein the first vertical plate (511) is fixed to a wall by a screw connection, such that the fastening plate (51) is fastened to the wall, wherein the waterproof micro-switch (52) is fastened to the second vertical plate (513), wherein a button (54) is arranged on the waterproof micro-switch (52), wherein the screw (53) is fixed to the fixed support (11) by means of a passage opening made in the horizontal element (111) of the fixed support (11), wherein, in the mounted state, it is ensured that the screw (53) just reaches the button (54) on the waterproof micro-switch (52), and wherein the distance that the button (54) lifts upon contact is adjustable.

## Revendications

1. Circuit de levage, comprenant un premier relais RL1, un deuxième relais RL2 et un moteur électrique, dans lequel la marche avant ou la marche arrière du moteur électrique est commandée au moyen des deux relais RL1 et RL2 afin de fournir un soulèvement ou un abaissement,
dans lequel l'excitation du premier relais RL1 provoque la marche avant du moteur électrique pour le soulèvement, et l'excitation du deuxième relais RL2 provoque la marche arrière du moteur électrique pour l'abaissement,
dans lequel le circuit de levage présente une section de commande pour piloter les relais,
dans lequel une borne de commande (UP) du premier relais RL1 est reliée à la section de commande, et le relais RL1 est excité si cette borne de commande (UP) dans la section de commande est reliée à la masse,
dans lequel une borne de commande (DN) du deuxième relais RL2 est reliée à la section de commande, et le relais est excité si cette section de commande (DN) dans la section de commande est reliée est la masse,
**caractérisé en ce que** la section de commande du circuit de levage comprend un circuit de protection anti-pincement,
dans lequel le circuit de protection anti-pincement présente un interrupteur de levage (P3) présentant une touche haut et une touche bas, un interrupteur de protection anti-pincement (P1), un circuit d'excitation, un circuit d'arrêt et un circuit d'arrêt de secours,
dans lequel, au niveau de l'interrupteur de levage (P3), trois bornes de liaison sont disposées qui sont reliées à la masse (GND), à la borne de commande (UP) du premier relais RL1 et à une première borne de liaison (DN Switch) de l'interrupteur de protection anti-pincement (P1), dans lequel la borne de liaison reliée à la masse (GND) est reliée à la borne de liaison reliée à la borne de commande (UP) du premier relais RL1 lorsque la touche haut est actionnée ce qui provoque la marche avant du moteur électrique pour le soulèvement, et dans lequel la borne de liaison reliée à la masse (GND) est reliée à la borne de liaison reliée à la première borne de liaison (DN Switch) de l'interrupteur de protection anti-pincement (P1) lorsque la touche bas est actionnée,
l'interrupteur de protection anti-pincement (P1) étant conçu pour être relié à un capteur qui se déclenche si un blocage se produit pendant le processus de fonctionnement,
dans lequel une deuxième borne de liaison de l'interrupteur de protection anti-pincement (P1) est reliée à la borne de commande (UP) du premier relais RL1, et la première borne de liaison (DN Switch) et la deuxième borne de liaison de l'interrupteur de protection anti-pincement (P1) sont reliées ensemble si un blocage se produit pendant l'abaissement,
dans lequel le circuit d'excitation est utilisé pour le fonctionnement normal du moteur électrique tant qu'aucun blocage ne se produit pendant le processus de fonctionnement, et le circuit d'excitation présente deux résistances (R1, R4), deux transistors (Q1, Q2) et deux diodes (D3, D6), dans lequel
- une extrémité d'une première résistance (R1) est reliée à une extrémité d'une deuxième résistance (R4) et à la borne de commande (UP) du premier relais RL1,
- l'autre extrémité de la première résistance (R1) est reliée à la base d'un premier transistor (Q1),
- l'autre extrémité de la deuxième résistance (R4) est reliée à la base d'un deuxième transistor (Q2),
- l'émetteur du premier transistor (Q1) est relié au collecteur du deuxième transistor (Q2),
- le collecteur du premier transistor (Q1) est relié à la borne de commande (DN) du deuxième relais RL2, et
- l'émetteur du deuxième transistor (Q2) est relié aux anodes des deux diodes (D3, D6) connectées en parallèle, et
- les cathodes des deux diodes (D3, D6) connectées en parallèle sont reliées à la première borne de liaison (DN Switch) de l'interrupteur de protection anti-pincement (P1)
de sorte que lorsque la touche bas est actionnée, la première borne de liaison (DN Switch) de l'interrupteur de protection anti-pincement (P1) et donc les cathodes des deux diodes (D3, D6) connectées en parallèle sont reliés à la masse (GND), les bornes de base des premiers et deuxièmes transistors (Q1, Q2) recevant un courant d'excitation par l'intermédiaire des résistances (R1, R4), de la borne de commande (UP) du premier relais RL1 et du premier relais, et la borne de commande (DN) du deuxième relais RL2 est donc reliée à la masse ce qui provoque une excitation du deuxième relais RL2 et la marche arrière du moteur électrique pour l'abaissement,
dans lequel le circuit d'arrêt est utilisé pour faire que le moteur électrique arrête sa rotation si un blocage se produit pendant le processus de fonctionnement et tourne dans le sens opposé,
et dans lequel le circuit d'arrêt de secours est connecté de manière identique et en parallèle à la structure du circuit d'arrêt de sorte qu'en cas de panne du circuit d'arrêt il assure la fonction de protection anti-pincement du circuit de protection anti-pincement,
dans lequel le circuit d'arrêt et le circuit d'arrêt de secours présentent respectivement trois résistances (R2, R5, R7 ou R3, R6, R8), deux transistors (Q3, Q5 ou Q4, Q6), deux diodes (D1, D4 ou D2, D5) et un condensateur (C1 ou C2), dans lequel respectivement
- l'anode d'une première diode (D1 ou D2) est reliée à la borne de commande (DN) du deuxième relais RL2,
- la cathode de la première diode (D1 ou D2) est reliée à l'émetteur d'un premier transistor (Q3 ou Q4),
- la base du premier transistor (Q3 ou Q4) est reliée à une extrémité d'une première résistance (R2 ou R3),
- l'autre extrémité de la première résistance (R2 ou R3) est reliée à la borne de commande (UP) du premier relais RL1,
- le collecteur du premier transistor (Q3 ou Q4) est relié respectivement à une extrémité d'une deuxième résistance (R5 ou R6), à une extrémité d'une troisième résistance (R7 ou R8) et à une extrémité du condensateur (C1 ou C2),
- l'autre extrémité de la troisième résistance (R7 ou R8) est reliée à l'autre extrémité du condensateur (C1 ou C2) et à la masse (GND),
- l'autre extrémité de la deuxième résistance (R5 ou R6) est reliée à la base d'un deuxième transistor (Q5 ou Q6),
- le collecteur du deuxième transistor (Q5 ou Q6) est également relié à la borne de commande (UP) du premier relais RL1,
- l'émetteur du deuxième transistor (Q5 ou Q6) est relié à l'anode d'une deuxième diode (D4 ou D5), et
- la cathode de la deuxième diode (D4 ou D5) est reliée à la première borne de liaison (DN Switch) de l'interrupteur de protection anti-pincement (P1) de sorte que si pendant l'actionnement de la touche bas de l'interrupteur de levage (P3) un blocage se produit et la première borne de liaison (DN Switch) et la deuxième borne de liaison de l'interrupteur de protection anti-pincement (P1) sont reliées ensemble et reliées à la masse (GND) par l'intermédiaire de l'interrupteur de levage (P3), les bornes de base des premiers transistors (Q3 ou Q4) du circuit d'arrêt et du circuit d'arrêt de secours reçoivent un courant d'excitation de sorte que les premiers transistors (Q3 ou Q4) sont excités de sorte que les bornes de base des deuxièmes transistors (Q5 ou Q6) du circuit d'arrêt et du circuit d'arrêt de secours reçoivent un courant d'excitation de sorte que les deuxièmes transistors (Q5 ou Q6) sont également excités et relient ainsi la borne de commande (UP) du premier relais RL1 à la première borne de liaison (DN Switch) de l'interrupteur de protection anti-pincement (P1) de sorte que même si l'interrupteur de protection anti-pincement (P1) s'ouvre le mouvement vers le haut continue tant que la touche bas de l'interrupteur de levage (P3) est actionnée.

2. Dispositif de levage, comprenant un sous-ensemble de déplacement présentant un lave-mains (20) réglable en hauteur, un sous-ensemble de levage (40), un sous-ensemble de protection anti-pincement (50) et un circuit de levage selon la revendication 1, dans lequel le sous-ensemble de levage (40) comprend le moteur électrique du circuit de levage et le sous-ensemble de protection anti-pincement (50) comprend l'interrupteur de protection anti-pincement (P1 ; 52) du circuit de levage, dans lequel le sous-ensemble de protection anti-pincement (50) fait que l'interrupteur de protection anti-pincement (P1 ; 52) est actionné lorsque le sous-ensemble de levage (40) rencontre une résistance lors d'un mouvement vers le bas de sorte que le moteur électrique du sous-ensemble de levage (40) tourne dans le sens opposé.

3. Dispositif de levage selon la revendication 2, **caractérisé en ce que** le sous-ensemble de déplacement comprend un élément de boîtier (10), l'élément de boîtier (10) présentant un support fixe (11) et un support mobile (12) qui est disposé devant le support fixe (11) et qui peut être décalé à la verticale, et dans lequel le sous-ensemble de levage (40) est disposé dans l'élément de boîtier (10) et est réalisé pour déplacer le support mobile (12) à la verticale.

4. Dispositif de levage selon la revendication 3, **caractérisé en ce que** le support fixe (11) est assemblé à partir de deux éléments horizontaux (111) et de deux éléments verticaux (112) et forme un cadre rectangulaire, dans lequel sur le support mobile (12), plusieurs élément coulissants (121) sont disposés de manière symétrique à gauche et à droite qui entourent sur le côté droit et le côté gauche du support mobile (12) respectivement un élément vertical (112) en liaison coulissante, le support mobile (12) comprenant une barre de liaison (122) disposée horizontalement, et dans lequel les deux extrémités du sous-ensemble de levage (40) sont reliées à la barre de liaison (122) ou au deuxième élément horizontal (111) qui se trouve dans la zone inférieure.

5. Dispositif de levage selon la revendication 4, **caractérisé en ce que** le sous-ensemble de levage (40) comprend le moteur électrique, un engrenage à vis sans fin, une tige de poussée (42) à entraînement électrique et un boîtier (43), l'extrémité inférieure de la tige de poussée (42) à entraînement électrique étant articulée en pivotement à l'élément horizontal (111), dans lequel le moteur électrique et la tige de poussée (42) à entraînement électrique sont reliés par l'intermédiaire de l'engrenage à vis sans fin, l'engrenage à vis sans fin étant disposé dans le boîtier (43), et dans lequel le boîtier (43) est articulé en pivotement à la tige de poussée (122).

6. Dispositif de levage selon la revendication 3, **caractérisé en ce que** le sous-ensemble de protection anti-pincement comprend une plaque de fixation (51), un microrupteur étanche à l'eau (52) et une vis (53), la plaque de fixation (51) comprenant dans une réalisation échelonnée une première plaque verticale (511), une plaque horizontale (512) et une deuxième plaque verticale (513), la première plaque verticale (511) étant ancrée dans une paroi par un assemblage vissé de sorte que la plaque de fixation (51) est fixée au mur, dans lequel le microrupteur étanche à l'eau (52) est fixé à la deuxième plaque verticale (513), un palpeur (54) étant disposé sur le microrupteur étanche à l'eau (52), la vis (53) étant ancrée dans le support fixe (11) au moyen d'une ouverture traversante disposée dans l'élément horizontal (111) du support fixe (11), dans lequel, à l'état monté, il est assuré que la vis (53) aille jusqu'au palpeur (54) sur le microrupteur étanche à l'eau (52), et dans lequel la course de levage de contact du palpeur (54) est réglable.
